# EUROPÄISCHE PATENTANMELDUNG

(11) **EP 0 530 461 A1**
(43) Veröffentlichungstag der Anmeldung: **10.03.1993**
(21) Anmeldenummer: 92111350.2
(22) Anmeldetag: 03.07.1992
(51) Int. Cl.: F16H 25/20, B60T 17/08

(54) **Einrichtung zur Axialverschiebung eines Bauteils**

(30) Priorität: 02.09.1991 DE 4129109
(71) Anmelder: WABCO STANDARD GmbH, D-53008 Bonn (DE)
(72) Erfinder: Pohl, Wolfgang, W-3008 Garbsen 6 (DE); Rischer, Ulrich, W-3257 Springe 11 (DE)
(74) Vertreter: Schrödter, Manfred, Dipl.-Ing.

(57) **Zusammenfassung**

2.1. Eine bekannte derartige Einrichtung mit einer Bewegungsschraube weist in Richtung der Axialverschiebung des Bauteils einen erheblichen Bedarf an Einbaulänge auf, weil die Veränderung der freien Länge der Bewegungsschraube gleich der Axialverschiebung ist.

2.2. Zur Verringerung des Bedarfs an Einbaulänge unter gleichzeitiger Bewahrung der Erkennbarkeit einer erfolgten Axialverschiebung des Bauteils schlägt die Erfindung vor, an der Bewegungsschraube (7) einen zweiten Gewindebereich (6) mit gegenläufigem Gewinde anzuordnen, mit dem das zu verschiebende Bauteil (4) in Eingriff steht und letzteres drehfest zu führen.

2.3. Ein Anwendungsgebiet der Erfindung ist die Lösevorrichtung eines Federspeicherzylinders, wie er auf dem Gebiet der Fahrzeugbremsen gebräuchlich ist.

## Beschreibung

Die Erfindung betrifft eine Einrichtung zur Axialverschiebung eines ersten Bauteils gegenüber einem zweiten Bauteil nach dem Oberbegriff des Patentanspruchs 1.

Eine derartige Einrichtung ist aus der WABCO Westinghouse-Druckschrift "Tristop-Zylinder 925 30.", Ausgabe August 1973, bekannt. "Tristop" ist ein eingetragenes Warenzeichen der WABCO Westinghouse Fahrzeugbremsen GmbH. Als zweites Bauteil ist dort das Zylindergehäuse des Federspeicherteils anzusehen. Als erstes Bauteil ist dort ein am Ende der Bewegungsschraube angebrachter Mitnehmer anzusehen. Bei einer Verdrehung der Bewegungsschraube wird das erste Bauteil axial gegenüber dem zweiten Bauteil verschoben. In dieser Einrichtung tritt die Bewegungsschraube um das Maß der Axialverschiebung des ersten Bauteils aus dem zweiten Bauteil heraus. Deshalb weist diese Einrichtung einen Bedarf an Einbau-Länge in Richtung der Axialverschiebung des ersten Bauteils auf, der nicht immer problemlos zur Verfügung gestellt werden kann.

Andererseits läßt sich an dem Heraustreten der Bewegungsschraube aus dem zweiten Bauteil erkennen, daß eine Axialverschiebung des ersten Bauteils stattgefunden hat. Dabei kann das Maß des Heraustretens als Maß der Axialverschiebung ausgewertet werden.

Es ist eine Lösung bekannt, bei der die Bewegungsschraube ohne einen Gewindeeingriff in dem zweiten Bauteil axial unverschieblich gelagert ist und das erste Bauteil gegenüber dem zweiten Bauteil drehfest gelagert ist und mit dem Gewinde der Bewegungsschraube im Eingriff steht. Bei dieser Lösung tritt die Bewegungsschraube beim Verdrehen und damit Axialverschieben des ersten Bauteils nicht aus dem zweiten Bauteil heraus. Diese Lösung weist einen geringeren Bedarf an Einbaulänge auf, sie bietet aber keine Möglichkeit des Erkennens der Axialverschiebung des ersten Bauteils und des Maßes derselben.

Der Erfindung liegt die Aufgabe zugrunde, eine Einrichtung der eingangs genannten Art mit einfachen Mitteln so fortzubilden, daß sie einen verringerten Bedarf an Einbaulänge unter Bewahrung der Erkennbarkeit einer erfolgten Axialverschiebung des ersten Bauteils gewährleistet.

Diese Aufgabe wird durch die in dem Patentanspruch 1 angegebene Erfindung gelöst. Vorteilhafte Ausgestaltungen und ein vorteilhafter Einsatzfall sind in den Unteransprüchen angegeben.

Das Anwendungsgebiet der Erfindung ist auf den angegebenen vorteilhaften Einsatzfall nicht beschränkt. Das der Erfindung zugrundeliegende Problem tritt auf vielen technischen Gebieten auf. Nur beispielsweise sei das Gebiet der Werkzeugmaschinen erwähnt.

Die Erfindung ermöglicht, das Maß des Heraustretens der Bewegungsschraube aus dem zweiten Bauteil als Maß für die erfolgte Axialverschiebung des ersten Bauteils auszuwerten.

Die Erfindung wird nunmehr anhand eines in zwei Figuren dargestellten Ausführungsbeispiels erläutert.

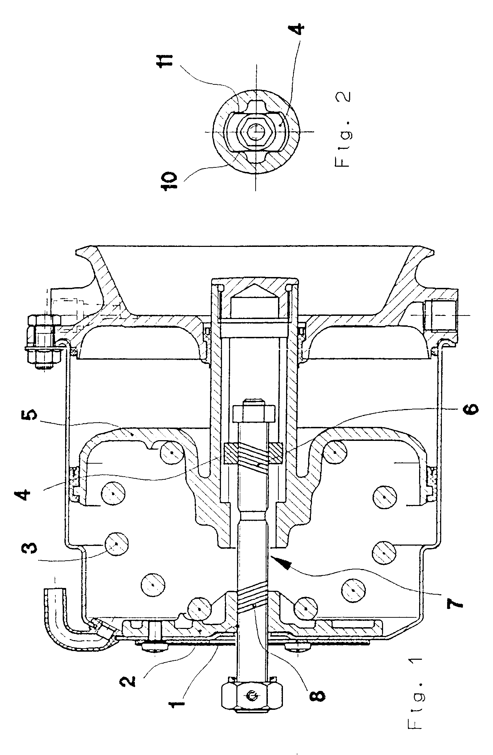

In Figur 1 weist ein Zweites Bauteil (2) eine Gewindebohrung (1) auf. Mit dem Innengewinde dieser Gewindebohrung (1) steht das Gewinde eines ersten Gewindebereichs (8) einer Bewegungschraube (7) im Eingriff.

Die Bewegungsschraube (7) weist einen zweiten Gewindebereich (6) auf. Das Gewinde des zweiten Gewindebereichs (6) ist zu dem Gewinde des ersten Gewindebereichs (8) gegenläufig ausgebildet. Dies ist zeichnerisch durch entgegengesetzt geneigte Schrägstriche in den Gewindebereichen (8 und 6) angedeutet. Beispielsweise können das Gewinde des ersten Gewindebereichs (8) ein Rechtsgewinde und das Gewinde des zweiten Gewindebereichs (6) ein Linksgewinde und umgekehrt sein.

Mit dem Gewinde des zweiten Gewindebereichs (6) der Bewegungsschraube (7) steht ein erstes Bauteil (4) im Eingriff. Zu diesem Zweck besitzt das erste Bauteil (4) ein zu dem Gewinde des zweiten Gewindebereichs (6) komplementäres Innengewinde. Das erste Bauteil (4) ist gegenüber dem zweiten Bauteil (2) drehfest, aber axial verschieblich geführt. Diese drehfeste Führung erfolgt im Ausführungsbeispiel dadurch, daß das erste Bauteil (4) exzentrisch ausgebildet ist und sich, wie Figur 2 näher zeigt, mit einer oder mehreren Seitenflächen (11) an seinem exzentrischen Teil in einem dazu komplementären inneren Führungsprofil (10) eines dritten Bauteils (5) abstützt, wobei das dritte Bauteil (5) das erste Bauteil (4) umfaßt und sich über eine Feder (3) drehfest oder nahezu drehfest an dem zweiten Bauteil (2) abstützt.

Für die folgende Funktionsbeschreibung sei angenommen, daß der erste Gewindeabschnitt (8) der Bewegungsschraube (7) ein Rechtsgewinde und der zweite Gewindeabschnitt (6) ein Linksgewinde aufweisen. Wird die Gewindeschraube (7) um eine Umdrehung linksherum verdreht, so tritt sie dabei um das Maß einer Gewindesteigung aus dem zweiten Bauteil (2) nach links heraus. Dabei wird das erste Bauteil (4) um das Maß dieser Gewindesteigung in Richtung des Heraustretens der Bewegungsschraube (7) relativ zum zweiten Bauteil (2) axial verschoben. Bei der Verdrehung der Bewegungsschraube (7) wird das erste Bauteil (4) aber auch in gleicher Richtung um eine Gewindesteigung des Gewindes des zweiten Gewindebereichs (6) relativ zur Bewegungsschraube (7) verschoben. Die gesamte Axialverschiebung des ersten Bauteils (4) relativ zum zweiten Bauteil (2) bei der genannten Verdrehung der Bewegungsschraube (7) ist die Resultierende aus beiden erwähnten Verschiebungen.

Das Ausführungsbeispiel stellt deshalb eine Einrichtung dar, bei der bei einer gegebenen Axialverschiebung des ersten Bauteils (4) die Bewegungsschraube (7) um ein Maß aus dem zweiten Bauteil (2) heraustritt, welches nach Maßgabe der Gewindesteigung des Gewindes des zweiten Gewindebereichs (6) der Bewegungsschraube (7) geringer als die Axialverschiebung des ersten Bauteils (4) ist. Die erfindungsgemäße Einrichtung kommt deshalb mit einem im Vergleich zu bekannten Einrichtungen verringerten Bedarf an Einbaulänge aus.
Allgemein läßt sich sagen: eine Verdrehung der Bewegungsschraube um n Umdrehungen hat eine Axialverschiebung des ersten Bauteils (4) relativ zum zweiten Bauteil (2) von n^{.}(s₁ + S₂) zur Folge, wobei s₁ die Gewindesteigung des Gewindes des ersten Gewindebereichs (8) und s₂ diejenige des Gewindes des zweiten Gewindebereiches (6) ist. Dabei tritt die Bewegungsschraube (7) um n^{.}s₁ aus dem zweiten Bauteil (2 heraus. Zwischen dem Maß des Heraustretens der Bewegungsschraube (7) aus dem zweiten Bauteil (2) und der Axialverschiebung des ersten Bauteils (4) gegenüber dem zweiten Bauteil (2) besteht also eine feste Beziehung. Diese ermöglicht, das Maß des Heraustretens der Bewegungsschraube (7) aus dem zweiten Bauteil (2) als Maß für die Axialverschiebung des ersten Bauteils (4) relativ zum zweiten Bauteil (2) auszuwerten.

Die beschriebene Einrichtung läßt sich zu jedem Zweck einsetzen, in dem es auf eine Axialverschiebung zweier Bauteile relativ zueinander ankommt.

Im Ausführungsbeispiel sind in dem ersten Bauteil (4) und dem zweiten Bauteil (2) Gewindebohrungen für den Eingriff mit den Gewinden der Bewegungsschraube (7) vorgesehen. Der Eingriff kann aber auch auf jede andere geeignete Weise sichergestellt werden, beispielsweise durch eine oder mehrere örtliche radiale Verengung(en) in einer gewindelosen Bohrung in dem jeweiligen Bauteil.

Im Ausführungsbeispiel ist das erste Bauteil (4) als Mitnehmer zur Axialverschiebung des dritten Bauteils (5) eingesetzt. Im Ausführungsbeispiel umfaßt das dritte Bauteil (5) das erste Bauteil (4) und führt es, wie weiter oben im einzelnen dargelegt ist, drehfest, aber axial verschieblich.

Das Ausführungsbeispiel gibt noch einen vorteilhaften Einsatzfall der beschriebenen Einrichtung an. Im Ausführungsbeispiel dient die Einrichtung als mechanische Lösevorrichtung eines Federspeicherzylinders. Die Funktionen eines solchen Federspeicherzylinders und seiner mechanischen Lösevorrichtung sind in der eingangs erwähnten WABCO Westinghouse-Druckschrift näher beschrieben. In diesem Einsatzfall sind die Bewegungsschraube (7) die Löseschraube, das zweite Bauteil (2) das Zylindergehäuse, das dritte Bauteil (5) der Kolben (mit hohler Kolbenstange) und die Feder (3) die Betätigungsfeder des Federspeicherzylinders.

Wie weiter oben schon zum Ausdruck gebracht, soll sich der Schutzbereich der vorliegenden Erfindung nicht in dem Ausführungsbeispiel erschöpfen, sondern alle Ausgestaltungen umfassen, deren Merkmale sich den Patentansprüchen unterordnen.

## Patentansprüche

1. Einrichtung zur Axialverschiebung eines ersten Bauteils (4) gegenüber einem zweiten Bauteil (2), mit einer einen Gewindebereich (8), dessen Gewinde mit dem zweiten Bauteil (2) im Eingriff steht, aufweisenden und mit dem ersten Bauteil (4) im Eingriff stehenden Bewegungsschraube (7),
dadurch gekennzeichnet, daß
a) die Bewegungsschraube (7) einen zweiten Gewindebereich (6) aufweist, dessen Gewinde gegenläufig zu demjenigen des anderen Gewindebereichs (8) ausgebildet ist,
b) der Eingriff zwischen der Bewegungsschraube (7) und dem ersten Bauteil (4) an dem Gewinde des zweiten Gewindebereichs (6) erfolgt,
c) das erste Bauteil (4) gegenüber dem zweiten Bauteil (2) drehfest geführt ist.

2. Einrichtung nach Anspruch 1, dadurch gekennzeichnet, daß das Gewinde des zweiten Gewindebereichs (6) ein Linksgewinde ist.

3. Einrichtung nach Anspruch 1, dadurch gekennzeichnet, daß das Gewinde des zweiten Gewindebereichs (6) ein Rechtsgewinde ist.

4. Einrichtung nach einem der vorhergehenden Ansprüche, dadurch gekennzeichnet, daß das erste Bauteil (4) ein Mitnehmer zur Axialverschiebung eines dritten Bauteils (Kolben 5) ist.

5. Einrichtung nach Anspruch 4, dadurch gekennzeichnet, daß das erste Bauteil (4) von dem dritten Bauteil (Kolben 5) umfaßt und in diesem drehfest geführt ist.

6. Einrichtung nach einem der Ansprüche 4 oder 5, dadurch gekennzeichnet, daß das dritte Bauteil (Kolben 5) der Kolben eines Federspeicherzylinders, das das dritte Bauteil axialverschieblich führende zweite Bauteil (2) das Zylindergehäuse des Federspeicherzylinders und die Bewegungsschraube (7) die Löseschraube des Federspeicherzylinders sind.
